# FASCICULE DE BREVET EUROPEEN

(11) **EP 4 081 078 B1**
(45) Date de publication et mention de la délivrance du brevet: **20.03.2024**
(21) Numéro de dépôt: 20838555.9
(22) Date de dépôt: 22.12.2020
(51) Int. Cl.: A47J 27/00, A47J 36/02

(54) **SUPPORT DE CUISSON METALLIQUE MULTICOUCHES REVETU POUVANT ETRE CHAUFFE PAR INDUCTION**
MEHRLAGIG BESCHICHTETES METALLISCHES KOCHGESTELL, DAS DURCH INDUKTION ERHITZT WERDEN KANN
MULTI-LAYER COATED METAL COOKING SUPPORT THAT CAN BE HEATED BY INDUCTION

(30) Priorité: 27.12.2019 FR 1915687
(43) Date de publication de la demande: 02.11.2022
(73) Titulaire: SEB S.A., 69130 Ecully (FR)
(72) Inventeur: RUBIO, Martin, 74150 RUMILLY (FR); BRASSET, Jean-François, 74000 ANNECY (FR)
(74) Mandataire: SEB Développement
(86) Numéro de dépôt international: PCT/EP2020/087713
(87) Numéro de publication internationale: WO 2021/130279

(56) Documents cités:
- WO-A2-2011/073577
- FR-A1- 3 070 245
- US-A1- 2007 292 706

## Description

La présente invention concerne le domaine technique des supports de cuisson métalliques compatibles avec un chauffage par induction, pour cuire ou réchauffer des aliments. De tels supports de cuisson métalliques peuvent être utilisés avec un dispositif de chauffage par induction tel qu'une plaque à induction posée ou intégrée à un plan de travail, ou qu'un foyer de chauffe par induction intégré à un appareil électrique de cuisson.

La présente invention concerne plus particulièrement les supports de cuisson métalliques multicouches revêtus compatibles avec un chauffage par induction. La présente invention concerne notamment, mais non exclusivement, les supports de cuisson métalliques multicouches revêtus formant un récipient de cuisson.

La présente invention concerne également les articles culinaires comprenant un support de cuisson métallique multicouches revêtu associé à au moins un organe de préhension. Si désiré le ou les organes de préhension peuvent être amovibles ou démontables par rapport au support de cuisson métallique multicouches revêtu.

La présente invention concerne également les appareils électriques de cuisson comportant un support de cuisson métallique multicouches revêtu associé à un dispositif de chauffage par induction.

Il est connu des documents EP2554080 et WO2011/073577 de réaliser un article culinaire revêtu compatible avec un chauffage par induction, dans lequel une plaque métallique formant une surface de cuisson est assemblée avec une plaque en acier inoxydable ferritique en utilisant une plaque d'aluminium intercalaire pour obtenir un assemblage métallurgique des différentes plaques.

Un inconvénient de ce type de réalisation réside dans le fait qu'un tel support de cuisson métallique revêtu présente un prix de revient relativement élevé, du fait notamment de la présence d'une opération de frappe pour obtenir un assemblage métallurgique des différentes plaques.

Un autre inconvénient de ce type de réalisation réside dans le fait qu'un tel support de cuisson métallique revêtu est relativement lourd, du fait de la présence de la plaque d'aluminium intercalaire et de la plaque en acier inoxydable ferritique.

Différents aspects de la présente invention visent à remédier aux inconvénients de l'art antérieur en proposant un support de cuisson métallique multicouches revêtu compatible avec un chauffage par induction, dont le prix de revient est limité.

Un premier aspect de la présente invention concerne un support de cuisson métallique multicouches revêtu compatible avec un chauffage par induction selon la revendication 1. L'acier bas carbone utilisé pour le substrat ferromagnétique est sensible au champ magnétique et peut être échauffé par induction. L'aluminium est au contraire un matériau perturbateur pour le champ magnétique utilisé pour le chauffage par induction. Toutefois lors de l'aluminisation d'une tôle d'acier une couche de réaction intermétallique se forme à l'interface entre l'acier et l'aluminium. Les composés intermétalliques de la couche intermédiaire n'ont pas le caractère perturbateur de l'aluminium pour le champ magnétique utilisé pour le chauffage par induction. Ainsi dans le revêtement à base d'aluminium utilisé pour l'aluminisation, l'épaisseur de la couche externe comportant une matrice à base d'aluminium apparait être le principal paramètre pertinent pour obtenir une compatibilité avec les plaques à induction. L'utilisation d'un tel corps métallique revêtu permet d'obtenir un support de cuisson métallique multicouches revêtu compatible avec un chauffage par induction qui est plus économique à réaliser qu'un support de cuisson métallique revêtu comprenant un corps en aluminium associé à un élément en acier ferromagnétique. L'utilisation d'un tel corps métallique revêtu permet d'obtenir un support de cuisson métallique multicouches revêtu compatible avec un chauffage par induction qui est plus léger qu'un support de cuisson métallique revêtu réalisé à partir de fonte d'acier. La tôle d'aluminium permet de limiter les points chauds et par conséquent le risque de surchauffe du revêtement antiadhésif formant la surface de cuisson.

La couche externe peut comporter des aiguilles de Al-Fe-Si dans une matrice d'aluminium-silicium. L'utilisation d'un bain d'aluminisation comportant de l'aluminium et du silicium permet de faciliter la réalisation de la couche externe lors de l'aluminisation de la tôle d'acier. Le silicium n'a pas le caractère perturbateur de l'aluminium pour le champ magnétique utilisé pour le chauffage par induction.

Le substrat ferromagnétique en acier bas carbone peut présenter une épaisseur comprise entre 0,3 et 1 mm, et de préférence une épaisseur comprise entre 0,3 et 0,5 mm, et la tôle d'aluminium peut présenter une épaisseur comprise entre 0,3 et 3 mm, et de préférence une épaisseur comprise entre 0,5 et 1,5 mm.

Le substrat ferromagnétique en acier bas carbone peut être réalisé dans une nuance d'acier comportant au plus 0,3% en masse de carbone, et de préférence entre 0,1 et 0,2 % en masse de carbone.

Le revêtement de protection peut être réalisé directement sur la face de chauffe du corps métallique. Le revêtement de protection peut comporter une ou plusieurs couches.

Le revêtement antiadhésif peut être réalisé directement sur la face de cuisson du corps métallique. Le revêtement antiadhésif peut comporter une ou plusieurs couches. Si désiré un revêtement intermédiaire peut être agencé entre le revêtement antiadhésif et le corps métallique, pour obtenir une base dure.

Le revêtement de protection peut notamment être un revêtement de type PTFE, ou un revêtement de type émail, ou un revêtement de type laque, ou un revêtement de type céramique, ou un revêtement de type sol-gel.

Selon un mode de réalisation, le revêtement de protection peut être un revêtement de type PTFE, ou un revêtement de type laque, ou un revêtement de type céramique, ou un revêtement de type sol-gel, le corps métallique comportant un dépôt à base d'aluminium présentant au moins sur le fond de la face de chauffe une épaisseur inférieure à 30 µm, et de préférence une épaisseur inférieure à 20 µm.

Selon un autre mode de réalisation, le revêtement de protection peut être un revêtement de type émail, le corps métallique comportant un dépôt à base d'aluminium présentant au moins sur le fond de la face de chauffe une épaisseur inférieure à 40 µm, et de préférence une épaisseur inférieure à 30 µm.

Le revêtement antiadhésif peut être un revêtement de type PTFE, ou un revêtement de type céramique, ou un revêtement de type sol-gel.

Le support de cuisson métallique multicouches revêtu peut présenter une paroi latérale s'élevant autour du fond de la face de chauffe pour former un récipient de cuisson.

Le support de cuisson métallique multicouches revêtu peut notamment présenter un bord pincé ou un bord roulé ou un bord roulé ouvert. Ces dispositions permettent d'éviter de laisser apparente la tranche du corps métallique.

Un deuxième aspect de la présente invention concerne un article culinaire selon la revendication 12.

Un troisième aspect de la présente invention concerne un appareil électrique de cuisson selon la revendication 13.

Un quatrième aspect de la présente invention concerne un procédé d'obtention d'un support de cuisson métallique multicouches revêtu compatible avec un chauffage par induction selon la revendication 14.

Un cinquième aspect de la présente invention concerne un procédé d'obtention d'un support de cuisson métallique multicouches revêtu compatible avec un chauffage par induction selon selon la revendication 15.

Selon l'un ou l'autre de ces aspects, après l'emboutissage de la forme multicouches, et avant la réalisation du revêtement de protection et du revêtement antiadhésif, le procédé peut comporter une étape de traitement d'une partie périphérique de la forme multicouches pour obtenir un bord pincé ou un bord roulé ou un bord roulé ouvert.

Le revêtement de protection peut notamment être un revêtement de type PTFE, ou un revêtement de type émail, ou un revêtement de type laque, ou un revêtement de type céramique, ou un revêtement de type sol-gel.

Le revêtement antiadhésif peut notamment être un revêtement de type PTFE, ou un revêtement de type céramique, ou un revêtement de type sol-gel.

Un sixième aspect de la présente invention concerne un procédé d'obtention d'un support de cuisson métallique multicouches revêtu compatible avec un chauffage par induction selon la revendication 19.

Après la réalisation du revêtement de protection et du revêtement antiadhésif et après l'emboutissage de la forme multicouches revêtue le procédé peut comporter une étape de traitement d'une partie périphérique de la forme multicouches revêtue pour obtenir un bord pincé ou un bord roulé ou un bord roulé ouvert.

Le revêtement de protection peut notamment être un revêtement de type PTFE, ou un revêtement de type laque.

Le revêtement antiadhésif peut être un revêtement de type PTFE.

Selon une forme de réalisation, la forme multicouches peut être un disque. D'autres formes sont toutefois envisageables.

D'autres caractéristiques et attributs de la présente invention apparaîtront plus clairement à la lecture de la description détaillée qui suit d'exemples de réalisation et de variantes, pris à titre nullement limitatif, illustrés dans les figures annexées, dans lesquelles :
[Fig 1] La figure 1 représente une vue schématique partielle d'un exemple de réalisation d'un corps métallique utilisé pour réaliser un support de cuisson métallique revêtu,
[Fig 2] La figure 2 représente une vue schématique en coupe agrandie du corps métallique représenté sur la figure 1,
[Fig 3] La figure 3 représente une vue en coupe agrandie d'une partie superficielle du corps métallique représenté sur la figure 2,
[Fig 4] La figure 4 représente une vue schématique en coupe agrandie du corps métallique représenté sur la figure 1, après réalisation d'un revêtement de protection et d'un revêtement antiadhésif,
[Fig 5] La figure 5 représente une vue schématique partielle d'un exemple de réalisation d'un corps métallique utilisé pour réaliser un support de cuisson métallique multicouches revêtu selon l'invention,
[Fig 6] La figure 6 représente une vue schématique en coupe du corps métallique représenté sur la figure 5, après réalisation d'un revêtement de protection et d'un revêtement antiadhésif,
[Fig 7] La figure 7 représente une vue schématique partielle d'un autre exemple de réalisation d'un corps métallique utilisé pour réaliser un support de cuisson métallique multicouches revêtu selon l'invention,
[Fig 8] La figure 8 représente une vue schématique en coupe du corps métallique représenté sur la figure 7, après réalisation d'un revêtement de protection et d'un revêtement antiadhésif,
[Fig 9] La figure 9 représente une vue schématique en coupe d'un exemple de réalisation d'un support de cuisson métallique multicouches revêtu selon l'invention comportant le corps métallique représenté sur la figure 6 ou sur la figure 8,
[Fig 10] La figure 10 représente une vue schématique en coupe d'une première variante de réalisation d'une partie périphérique d'un support de cuisson métallique multicouches revêtu selon l'invention, présentant un bord pincé,
[Fig 11] La figure 11 représente une vue schématique en coupe d'une deuxième variante de réalisation d'une partie périphérique d'un support de cuisson métallique multicouches revêtu selon l'invention, présentant un bord roulé,
[Fig 12] La figure 12 représente une vue schématique en coupe d'une troisième variante de réalisation d'une partie périphérique d'un support de cuisson métallique multicouches revêtu selon l'invention, présentant un bord roulé ouvert,
[Fig 13] La figure 13 représente une vue schématique en élévation et en coupe verticale d'un exemple de réalisation d'un article culinaire comportant un support de cuisson métallique multicouches revêtu selon l'invention,
[Fig 14] La figure 14 représente une vue schématique en élévation et en coupe verticale d'un exemple de réalisation d'un appareil électrique de cuisson comportant un support de cuisson métallique multicouches revêtu selon l'invention.

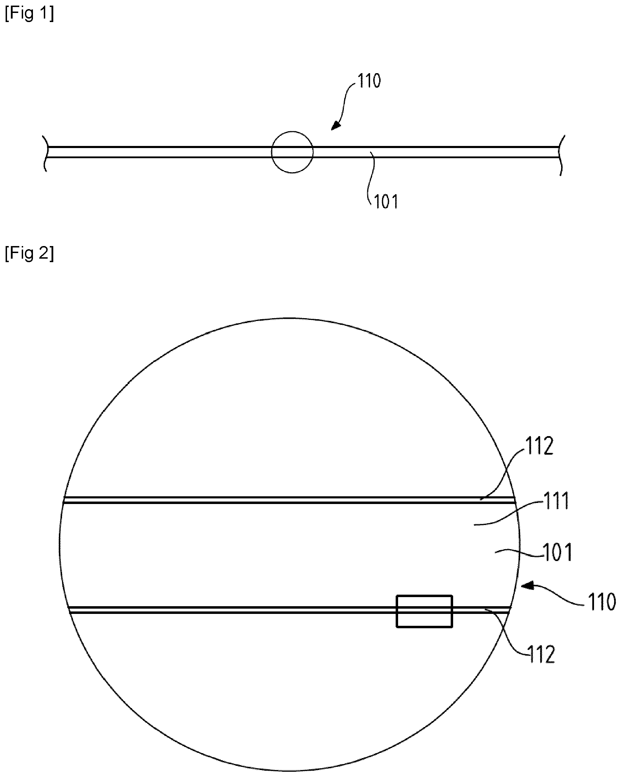

La figure 1 illustre un exemple de réalisation d'un corps métallique 110 utilisé pour réaliser un support de cuisson métallique revêtu compatible avec un chauffage par induction.

Le corps métallique 110 est réalisé en tôle d'acier ferromagnétique bas carbone aluminisée bi-face 101. L'aluminisation bi-face d'une tôle d'acier ferromagnétique bas carbone est obtenue par immersion dans un bain d'aluminisation à base d'aluminium, pour réaliser un dépôt 115 à base d'aluminium. Le bain à base d'aluminium peut comporter du silicium, notamment entre 8 et 13% en masse de silicium, pour faciliter le dépôt sur l'acier. Un alliage aluminium-silicium de type AS peut notamment être utilisé, par exemple un alliage AS comportant entre 8 et 13% en masse de silicium. Toutefois l'utilisation d'un bain d'aluminisation présentant des proportions moindres de silicium, ou d'un bain d'aluminisation dépourvu de silicium, peut être envisagé. La quantité de matière déposée sur la tôle d'acier peut être évaluée par pesée. La masse additionnelle ainsi obtenue permet de définir une épaisseur pour le dépôt 115 à base d'aluminium sur la tôle d'acier. Usuellement un teldépôt 115 à base d'aluminium peut atteindre plusieurs dizaines de µm.

Tel que représenté sur la figure 2, la tôle d'acier ferromagnétique bas carbone aluminisée bi-face 101 utilisée pour réaliser le support de cuisson métallique revêtu compatible avec un chauffage par induction comprend un substrat ferromagnétique en acier bas carbone 111 présentant sur chacune de ses deux faces une couche externe 112 à base d'aluminium.

Le substrat ferromagnétique en acier bas carbone 111 peut présenter une épaisseur comprise entre 0,7 et 3 mm, notamment une épaisseur comprise entre 1 et 2 mm. Le matériau du substrat ferromagnétique en acier bas carbone 111 est choisi pour être compatible avec un chauffage par induction. Le substrat ferromagnétique en acier bas carbone 111 peut être réalisé dans une nuance d'acier comportant au plus 0,3% en masse de carbone, et de préférence entre 0,1 et 0,2 % en masse de carbone. Le substrat ferromagnétique en acier bas carbone 111 peut notamment être réalisé dans une nuance DX51 à DX56 comportant entre 0,12% et 0 ,18% en masse de carbone et jusqu'à 0,5 % en masse de silicium.

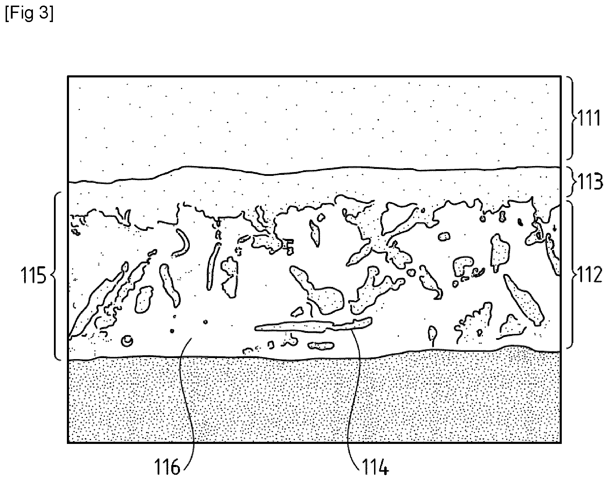

Tel que mieux visible sur la figure 3, une couche intermédiaire 113 est agencée entre le substrat ferromagnétique en acier bas carbone 111 et la couche externe 112. La couche intermédiaire 113 est une couche de réaction intermétallique comportant des composés intermétalliques fer/aluminium, notamment FeAl₃ et Fe₂Al₅. Ainsi tout le dépôt 115 à base d'aluminium réalisé sur la tôle d'acier ne se retrouve pas dans la couche externe 112. Une partie du dépôt 115 à base d'aluminium se retrouve dans la couche intermédiaire 113.

L'épaisseur de cette couche intermédiaire 113 est usuellement comprise entre 3 et 5 µm. Toutefois des traitements thermiques au-delà de 500°C peuvent contribuer à faire croitre l'épaisseur de cette couche intermédiaire 113 au détriment de l'épaisseur de la couche externe 112, cette couche intermédiaire 113 peut alors se subdiviser en plusieurs sous couches présentant des ratios aluminium/fer différents, ces ratios croissant du substrat ferromagnétique en acier bas carbone 111 vers la couche externe 112.

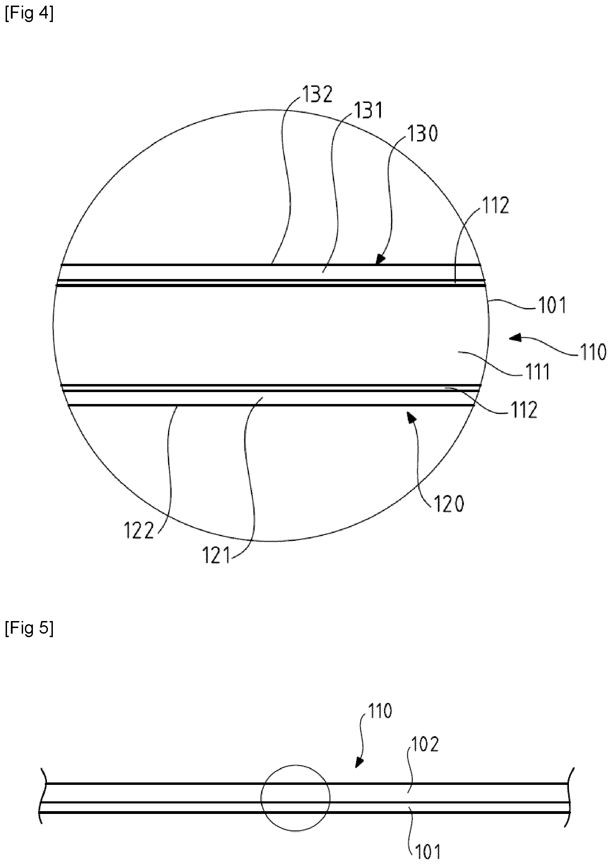

La couche externe 112 à base d'aluminium peut comporter du silicium, lorsque le bain d'aluminisation comporte du silicium, notamment entre 8 et 13% en masse de silicium. La couche externe 112 peut alors comporter des aiguilles de Al-Fe-Si 114 dans une matrice d'aluminium-silicium 116, tel que visible dans l'exemple de réalisation illustré sur la figure 4.

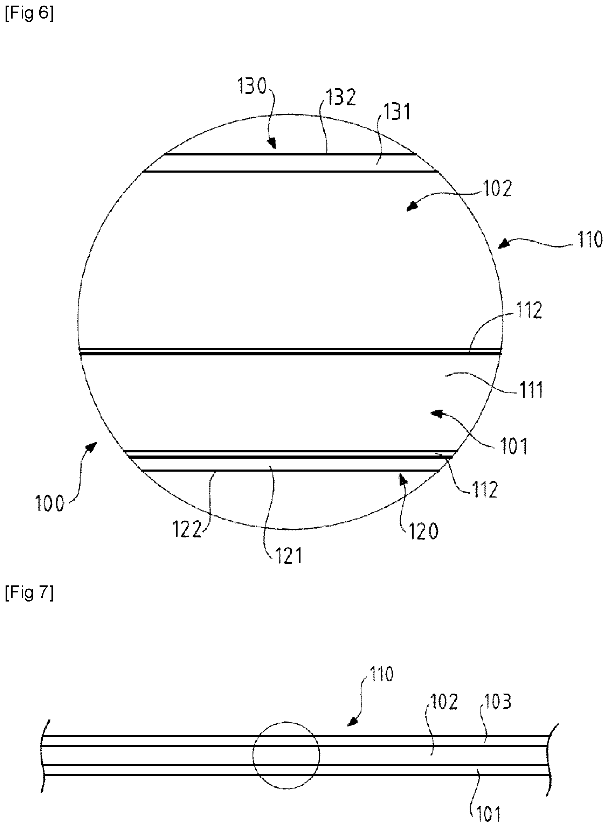

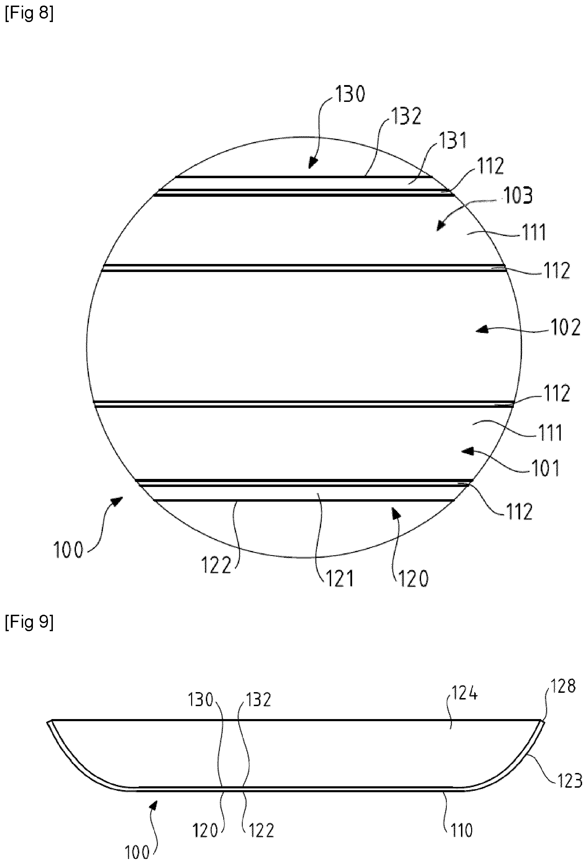

Les figures 5 et 6 illustrent deux exemples de réalisation d'un corps métallique 110 utilisé pour réaliser un support de cuisson métallique multicouches revêtu 100 compatible avec un chauffage par induction, représenté sur la figure 9.

Le corps métallique 110 représenté sur la figure 5 diffère du corps métallique 110 représenté sur la figure 1 en ce qu'il comporte une tôle d'aluminium 102 assemblée métallurgiquement avec la tôle d'acier ferromagnétique bas carbone aluminisée bi-face 101. La tôle d'aluminium 102 est réalisée en alliage d'alumium corroyé. Le placage de la tôle d'aluminium 102 assemblée métallurgiquement avec la tôle d'acier ferromagnétique bas carbone aluminisée bi-face 101 peut par exemple être réalisé par laminage ou par diffusion. L'épaisseur de la tôle d'acier ferromagnétique bas carbone aluminisée bi-face 101 est par exemple de 0,3 à 1 mm et de préférence comprise entre 0,3 et 0,5 mm. L'épaisseur de la tôle d'aluminium 102 est par exemple de 0,3 à 3 mm, et de préférence comprise entre 0,5 et 1,5 mm.

Le corps métallique 110 représenté sur la figure 6 diffère du corps métallique 110 représenté sur la figure 5 en ce qu'il comporte une autre tôle d'acier ferromagnétique bas carbone aluminisée bi-face 103 assemblée métallurgiquement avec la tôle d'aluminium 102. Le placage de la tôle d'aluminium 102 assemblée métallurgiquement avec la tôle d'acier ferromagnétique bas carbone aluminisée bi-face 101 et avec l'autre tôle d'acier ferromagnétique bas carbone aluminisée bi-face 103 peut par exemple être réalisé par laminage ou par diffusion. L'épaisseur de la tôle d'acier ferromagnétique bas carbone aluminisée bi-face 101 est par exemple de 0,3 à 1 mm et de préférence comprise entre 0,3 et 0,5 mm. L'épaisseur de la tôle d'aluminium 102 est par exemple de 0,3 à 3 mm, et de préférence comprise entre 0,5 et 1,5 mm. L'épaisseur de l'autre tôle d'acier ferromagnétique bas carbone aluminisée bi-face 103 est par exemple de 0,3 à 1 mm et de préférence comprise entre 0,3 et 0,5 mm.

Tel que représenté sur la figure 9, le corps métallique 110 comprend une face de chauffe 120 et une face de cuisson 130. La face de chauffe 120 présente un fond 122 configuré pour reposer sur un dispositif de chauffage par induction, notamment sur une plaque à induction ou sur un foyer de chauffe par induction.

Tel que représenté sur la figure 9, la face de chauffe 120 porte un revêtement de protection 121 ; la face de cuisson 130 porte un revêtement antiadhésif 131 formant une surface de cuisson 132.

Le support de cuisson métallique multicouches revêtu 100 compatible avec un chauffage par induction selon l'invention représenté sur la figure 6 ou sur la figure 8 comporte le corps métallique 110, le revêtement de protection 121, et le revêtement antiadhésif 131. Le corps métallique 110 porte le revêtement de protection 121 et le revêtement antiadhésif 131.

Dans la réalisation de la figure 1 comme dans les exemples de réalisation de la figure 5 et de la figure 6, la face de chauffe 120 est formée par la tôle d'acier ferromagnétique bas carbone aluminisée bi-face 101.

Dans l'exemple de réalisation de la figure 6, la face de cuisson 130 est formée par la tôle d'aluminium 102. L'épaisseur de la tôle d'aluminium 102 est par exemple de l'ordre de 1,2 mm, l'épaisseur de la tôle d'acier ferromagnétique bas carbone aluminisée bi-face 101 étant par exemple de l'ordre de 0,3 mm.

Dans l'exemple de réalisation de la figure 8, la face de cuisson 130 est formée par l'autre tôle d'acier ferromagnétique bas carbone aluminisée bi-face 103. L'épaisseur de la tôle d'aluminium 102 est par exemple de l'ordre de 1,2 mm, l'épaisseur de la tôle d'acier ferromagnétique bas carbone aluminisée bi-face 101 et de l'autre tôle d'acier ferromagnétique bas carbone aluminisée bi-face 103 étant par exemple de l'ordre de 0,3 mm.

Si désiré le revêtement de protection 121 peut être réalisé directement sur la face de chauffe 120 du corps métallique 110, notamment sur la couche externe 112 du côté du fond 122. Si nécessaire une préparation de surface peut être effectuée sur la face de chauffe 120 avant la réalisation du revêtement de protection 121. Le revêtement de protection 121 peut notamment être un revêtement de type PTFE, ou un revêtement de type émail, ou un revêtement de type laque, ou un revêtement de type céramique, ou un revêtement de type sol-gel.

Si désiré le revêtement antiadhésif 131 peut être réalisé directement sur la face de cuisson 130 du corps métallique 110. Si nécessaire une préparation de surface peut être effectuée sur la face de cuisson 130 avant la réalisation du revêtement de protection 121. Le revêtement antiadhésif 131 peut notamment être un revêtement de type PTFE, ou un revêtement de type céramique, ou un revêtement de type sol-gel.

Tel que représenté sur la figure 9, le support de cuisson métallique multicouches revêtu 100 peut comporter une paroi latérale 123 s'élevant autour du fond 122 de la face de chauffe 120 pour former un récipient de cuisson 124. A titre de variante, le support de cuisson métallique multicouches revêtu 100 ne forme pas nécessairement un récipient de cuisson 124. Le support de cuisson métallique multicouches revêtu 100 peut notamment former une plaque de cuisson.

Des essais réalisés avec plusieurs plaques à induction ont montré que le paramètre pertinent pour obtenir une compatibilité avec un chauffage par induction sur différents dispositifs de chauffage par induction est l'épaisseur de la couche externe 112 sur le fond 122 de la face de chauffe 120, et non l'épaisseur du dépôt 115 à base d'aluminium sur le fond 122 de la face de chauffe 120. Les plaques à induction utilisées sont décrites dans le tableau 1.

**[Table 1]**

| | MIELE^{®} | THOR^{®} | BRANDT^{®} |
|---|---|---|---|
| Réf | KM5946 | TTI63R | TI312 BT1 |
| Puissance | 3000 W | 2300 W | 2000 W |
| Ø inducteur | 260 mm | 220 mm | 210 mm |

En effet, ces essais ont montré que la valeur limite de l'épaisseur du dépôt 115 à base d'aluminium sur le fond 122 de la face de chauffe 120 pour obtenir un couplage sur une plaque à induction est de l'ordre de 30 µm lorsque le revêtement de protection 121 est un revêtement de type PTFE, ou un revêtement de type laque, ou un revêtement de type céramique, ou un revêtement de type sol-gel, mais que la valeur limite de l'épaisseur du dépôt 115 à base d'aluminium sur le fond 122 de la face de chauffe 120 pour obtenir un couplage sur une plaque à induction est de l'ordre de 40 µm lorsque le revêtement de protection 121 est un revêtement de type émail. Ces essais ont montré également qu'un couplage satisfaisant était obtenu avec toutes les plaques à induction en deçà d'une épaisseur de dépôt 115 à base d'aluminium sur le fond 122 de la face de chauffe 120 de l'ordre de 20 µm, lorsque le revêtement de protection 121 est un revêtement de type PTFE, ou un revêtement de type laque, ou un revêtement de type céramique, ou un revêtement de type sol-gel ; et en deçà d'une épaisseur de dépôt 115 à base d'aluminium sur le fond 122 de la face de chauffe 120 de l'ordre de 30 µm, lorsque le revêtement de protection 121 est un revêtement de type émail. L'utilisation d'un revêtement de type émail nécessite des températures de cuisson de l'ordre de 550°C à 600°C°. Or au-delà de 500°C un phénomène de diffusion se déroulant à l'interface acier/aluminium favorise la formation de composés intermétalliques fer/aluminium, ce qui déplace l'interface entre la couche intermédiaire 113 et la couche externe 112, et réduit l'épaisseur de la couche externe 112.

L'épaisseur de la couche intermédiaire 113 est de l'ordre de 3 à 5 µm, mais peut être plus importante notamment en cas de traitement thermique favorisant la croissance de l'épaisseur de la couche intermédiaire 113, le cas échéant sous forme de plusieurs sous-couches, et/ou la réduction de l'épaisseur de la couche externe 112.

L'épaisseur de la couche externe 112 sur le fond 122 de la face de chauffe 120 est déterminante pour la compatibilité du support de cuisson métallique multicouches revêtu 100 avec un chauffage par induction. Une épaisseur inférieure à 27 µm pour la couche externe 112 sur le fond 122 de la face de chauffe 120 est considérée comme une valeur limite pour obtenir un couplage sur une plaque à induction. Pour la couche externe 112 sur le fond 122 de la face de chauffe 120, une épaisseur inférieure à 26 µm donne un meilleur résultat qu'une épaisseur inférieure à 27 µm, une épaisseur inférieure à 25 µm donne un meilleur résultat qu'une épaisseur inférieure à 26 µm, une épaisseur inférieure à 24 µm donne un meilleur résultat qu'une épaisseur inférieure à 25 µm, une épaisseur inférieure à 23 µm donne un meilleur résultat qu'une épaisseur inférieure à 24 µm, une épaisseur inférieure à 22 µm donne un meilleur résultat qu'une épaisseur inférieure à 23 µm, une épaisseur inférieure à 21 µm donne un meilleur résultat qu'une épaisseur inférieure à 22 µm, une épaisseur inférieure à 20 µm donne un meilleur résultat qu'une épaisseur inférieure à 21 µm, une épaisseur inférieure à 19 µm donne un meilleur résultat qu'une épaisseur inférieure à 20 µm, une épaisseur inférieure à 18 µm donne un meilleur résultat qu'une épaisseur inférieure à 19 µm, une épaisseur inférieure à 17 µm donne un meilleur résultat qu'une épaisseur inférieure à 18 µm. Une épaisseur inférieure à 20 µm pour la couche externe 112 sur le fond 122 de la face de chauffe 120 permet un couplage assez satisfaisant avec les plaques à induction. Une épaisseur inférieure à 18 µm pour la couche externe 112 sur le fond 122 de la face de chauffe 120 permet un couplage très satisfaisant avec les plaques à induction. Les rendements (puissance absorbée par le support de cuisson métallique multicouches revêtu 100 / puissance émise par la plaque à induction) peuvent approcher 100%. La vitesse de chauffe est très rapide.

Tel que représenté sur la figure 9, le support de cuisson métallique multicouches revêtu 100 compatible avec un chauffage par induction présente une tranche 128 apparente. La tranche 128 est généralement dépourvue de couche externe 112 du fait de la découpe du corps métallique 110 pour réaliser une forme multicouches adaptée à la réalisation du support de cuisson métallique multicouches revêtu 100. La tranche 128 peut être recouverte au moins partiellement par le revêtement de protection 121 et/ou par le revêtement antiadhésif 131. De préférence la tranche 128 apparente est recouverte par le revêtement de protection 121 et/ou par le revêtement antiadhésif 131.

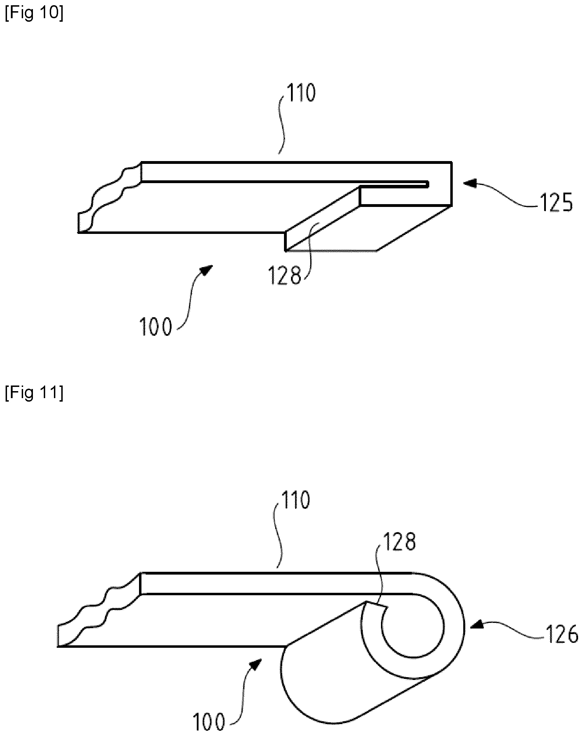

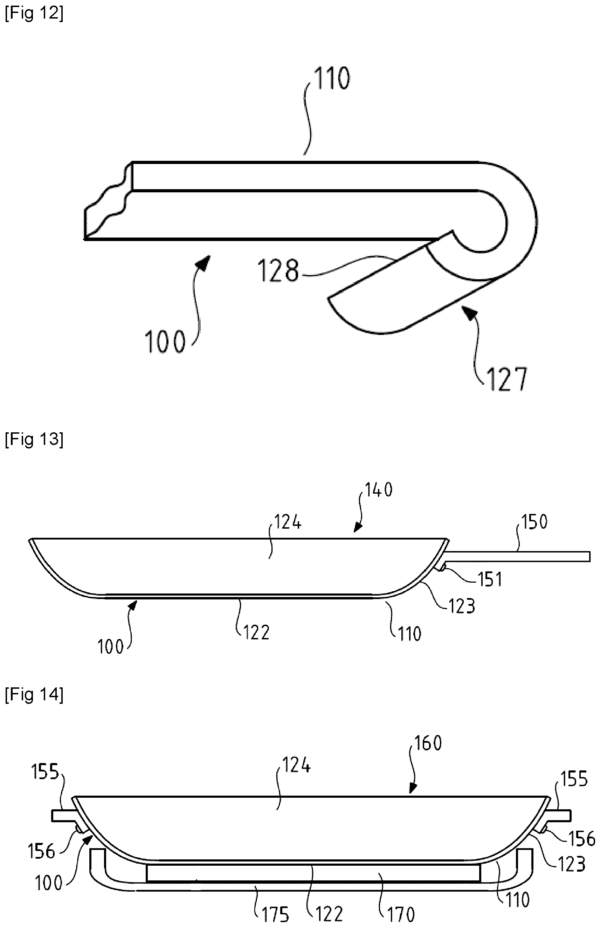

Tel que représenté sur la figure 10, le support de cuisson métallique multicouches revêtu 100 compatible avec un chauffage par induction peut présenter un bord pincé 125. Tel que représenté sur la figure 11, le support de cuisson métallique multicouches revêtu 100 compatible avec un chauffage par induction peut présenter un bord roulé 126. Tel que représenté sur la figure 12, le support de cuisson métallique multicouches revêtu 100 compatible avec un chauffage par induction peut présenter un bord roulé ouvert 127. Ainsi la tranche 128 n'apparait pas sur la face supérieure du support de cuisson métallique multicouches revêtu 100.

La figure 13 illustre un article culinaire 140 comportant le support de cuisson métallique multicouches revêtu 100 et un organe de préhension 150 monté sur le support de cuisson métallique multicouches revêtu 100. Le support de cuisson métallique multicouches revêtu 100 forme le récipient de cuisson 124 illustré sur la figure 9. Dans l'exemple de réalisation illustré sur la figure 9, l'organe de préhension 150 est fixé au récipient de cuisson 124 par au moins un rivet 151. A cet effet le rivet 151 est monté dans un trou ménagé dans la paroi latérale 123. Si désiré plusieurs rivets 151 peuvent être utilisés pour fixer l'organe de préhension 150 sur le récipient de cuisson 124. De préférence entre deux et quatre rivets 151 sont utilisés pour fixer l'organe de préhension 150 sur le récipient de cuisson 124. En alternative l'organe de préhension 150 pourrait être fixé sur la paroi latérale 123 par soudage ou par vissage sur un goujon soudé sur la paroi latérale 123. Si désiré un autre organe de préhension peut être fixé sur la paroi latérale 123 du récipient de cuisson 124 au moyen d'au moins un autre rivet, par soudage ou par vissage sur un goujon soudé sur la paroi latérale 123

La figure 14 illustre un appareil électrique de cuisson 160 comportant le support de cuisson métallique multicouches revêtu 100 associé à un foyer de chauffe par induction 170. Le support de cuisson métallique multicouches revêtu 100 forme le récipient de cuisson 124 illustré sur la figure 9. Le récipient de cuisson 124 est agencé dans une base chauffante 175 comportant le foyer de chauffe par induction 170. Le fond 122 repose sur le foyer de chauffe par induction 170. Si désiré le récipient de cuisson 124 peut comporter au moins un organe de préhension 155. Dans l'exemple de réalisation illustré sur la figure 14 le récipient de cuisson 124 comporte deux organes de préhension 155 opposés. Le ou chaque organe de préhension 155 est fixé au récipient de cuisson 124 par au moins un rivet 156. A cet effet le rivet 156 est monté dans un trou ménagé dans la paroi latérale 123. Si désiré plusieurs rivets 156 peuvent être utilisés pour fixer le ou chaque organe de préhension 155 sur le récipient de cuisson 124. De préférence entre deux et quatre rivets 156 sont utilisés pour fixer le ou chaque organe de préhension 155 sur le récipient de cuisson 124. En alternative le ou au moins un des organes de préhension 155 pourrait être fixé sur la paroi latérale 123 par soudage ou par vissage sur un goujon soudé sur la paroi latérale 123.

Le support de cuisson métallique multicouches revêtu 100 compatible avec un chauffage par induction selon l'invention peut être obtenu par différents procédés.

Un premier procédé d'obtention d'un support de cuisson métallique multicouches revêtu 100 compatible avec un chauffage par induction comporte les étapes suivantes :
- Découpe ou fourniture d'une forme multicouches issue d'une tôle d'acier ferromagnétique bas carbone aluminisée bi-face 101 assemblée métallurgiquement avec une tôle d'aluminium 102, la tôle d'acier ferromagnétique bas carbone aluminisée bi-face 101 présentant une première face libre, la tôle d'aluminium 102 présentant une deuxième face libre,
- Emboutissage de la forme multicouches pour former le corps métallique 110 comprenant la face de chauffe 120 correspondant à la première face libre et la face de cuisson 130 correspondant à la deuxième face libre,
- Réalisation du revêtement de protection 121 sur la face de chauffe 120,
- Réalisation du revêtement antiadhésif 131 sur la face de cuisson 130 pour former la surface de cuisson 132.

Un deuxième procédé d'obtention d'un support de cuisson métallique multicouches revêtu 100 compatible avec un chauffage par induction comporte les étapes suivantes :
- Découpe ou fourniture d'une forme multicouches issue d'une tôle d'aluminium 102 assemblée métallurgiquement avec une tôle d'acier ferromagnétique bas carbone aluminisée bi-face 101 et avec une autre tôle d'acier ferromagnétique bas carbone aluminisée bi-face 103, la tôle d'acier ferromagnétique bas carbone aluminisée bi-face 101 présentant une première face libre, l'autre tôle d'acier ferromagnétique bas carbone aluminisée bi-face 103 présentant une deuxième face libre,
- Emboutissage de la forme multicouches pour former le corps métallique 110 comprenant la face de chauffe 120 correspondant à la première face libre et la face de cuisson 130 correspondant à la deuxième face libre,
- Réalisation du revêtement de protection 121 sur la face de chauffe 120,
- Réalisation du revêtement antiadhésif 131 sur la face de cuisson 130 pour former la surface de cuisson 132.

La forme multicouches peut notamment être un disque. Si désiré après l'emboutissage de la forme multicouches et avant la réalisation du revêtement de protection 121 et du revêtement antiadhésif 131 le premier procédé ou le deuxième procédé peut comporter une étape de traitement d'une partie périphérique de la forme multicouches pour obtenir un bord pincé 125 ou un bord roulé 126 ou un bord roulé ouvert 127.

Dans ce premier procédé ou dans ce deuxième procédé, le revêtement de protection 121 et le revêtement antiadhésif 131 sont réalisés après l'opération de mise en forme. La gamme de revêtements susceptibles d'être utilisés est large. Le revêtement de protection 121 peut notamment être un revêtement de type PTFE, ou un revêtement de type émail, ou un revêtement de type laque, ou un revêtement de type céramique, ou un revêtement de type sol-gel. Le revêtement antiadhésif 131 peut notamment être un revêtement de type PTFE, ou un revêtement de type céramique, ou un revêtement de type sol-gel.

Un troisième procédé d'obtention d'un support de cuisson métallique multicouches revêtu 100 compatible avec un chauffage par induction comporte les étapes suivantes :
- Découpe ou fourniture d'une forme multicouches issue d'une tôle d'aluminium assemblée métallurgiquement avec une tôle d'acier ferromagnétique bas carbone aluminisée bi-face 101 et avec une autre tôle d'acier ferromagnétique bas carbone aluminisée bi-face 103, la tôle d'acier ferromagnétique bas carbone aluminisée bi-face 101 présentant une première face libre, l'autre tôle d'acier ferromagnétique bas carbone aluminisée bi-face 103 présentant une deuxième face libre,
- Réalisation d'un revêtement de protection 121 sur la première face libre et d'un revêtement antiadhésif 131 sur la deuxième face libre, pour obtenir une forme multicouches revêtue,
- Emboutissage de la forme multicouches revêtue pour former le corps métallique 110 revêtu comprenant la face de chauffe 120 portant le revêtement de protection 121 et la face de cuisson 130 portant le revêtement antiadhésif 131 pour former la surface de cuisson 132.

La forme multicouches peut notamment être un disque. Si désiré après la réalisation du revêtement de protection 121 et du revêtement antiadhésif 131 et après l'emboutissage de la forme multicouches revêtue le troisième procédé peut comporter une étape de traitement d'une partie périphérique de la forme pour obtenir un bord pincé 125 ou un bord roulé 126 ou un bord roulé ouvert 127.

Dans ce troisième procédé, le revêtement de protection 121 et le revêtement antiadhésif 131 sont réalisés avant l'opération de mise en forme. De ce fait la gamme de revêtements susceptibles d'être utilisés est plus restreinte. Le revêtement de protection 121 et le revêtement antiadhésif 131 doivent autoriser une mise en forme par emboutissage de la forme. Le revêtement de protection 121 peut notamment être un revêtement de type PTFE, ou un revêtement de type laque. Le revêtement antiadhésif 131 peut notamment être un revêtement de type PTFE.

L'utilisation d'un corps métallique 110 comprenant sur une de ses faces une tôle d'acier ferromagnétique bas carbone aluminisée bi-face 101 pour réaliser le support de cuisson métallique multicouches revêtu 100 permet d'utiliser des procédés de fabrication conventionnels, ce qui limite les investissements nécessaires.

Le support de cuisson métallique multicouches revêtu 100 est très résistant mécaniquement. Le rendement (puissance absorbée / puissance émise par le dispositif de chauffe par induction) est très élevé, notamment si l'épaisseur du dépôt 115 à base d'aluminium est inférieure à 20 µm. La vitesse de chauffe est élevée : environ 15 secondes pour une poêle de diamètre 28 cm contre environ 1 min 30 pour une poêle standard de même diamètre en aluminium comportant un insert en acier inoxydable pour la compatibilité avec le chauffage par induction. Des économies d'énergie peuvent être réalisées, du fait que la puissance fournie par le dispositif de chauffage par induction peut être moins élevée.

Avec une construction à deux couches selon l'exemple de réalisation de la figure 6 ou à trois couches selon l'exemple de réalisation de la figure 8, la présence d'une tôle d'aluminium 102 assemblée métallurgiquement avec la tôle d'acier ferromagnétique bas carbone aluminisée bi-face 101 permet d'améliorer l'homogénéité thermique de la surface de cuisson 132.

Avec une construction à deux couches selon l'exemple de réalisation de la figure 6, le support de cuisson métallique multicouches revêtu 100 reste assez léger tout en offrant une meilleure homogénéité thermique.

Avec une construction à trois couches selon l'exemple de réalisation de la figure 8, la présence d'une autre tôle d'acier ferromagnétique bas carbone aluminisée bi-face 103 assemblée métallurgiquement avec la tôle d'aluminium 102 permet d'utiliser un procédé dans lequel la mise en forme est réalisée après les opérations de revêtement. Le support de cuisson métallique multicouches revêtu 100 reste relativement léger.

Diverses modifications et/ou améliorations évidentes pour l'homme du métier peuvent être apportées aux exemples de réalisation de l'invention décrits dans la présente description sans sortir du cadre de l'invention défini par les revendications annexées.

## Revendications

1. Support de cuisson métallique multicouches revêtu (100) compatible avec un chauffage par induction, comportant un corps métallique (110) comprenant une face de chauffe (120) et une face de cuisson (130), la face de chauffe (120) présentant un fond (122) configuré pour reposer sur un dispositif de chauffage par induction, la face de chauffe (120) portant un revêtement de protection (121), la face de cuisson (130) portant un revêtement antiadhésif (131) formant une surface de cuisson (132), **caractérisé en ce que** le corps métallique (110) comporte une tôle d'aluminium (102) assemblée métallurgiquement avec une tôle d'acier ferromagnétique bas carbone aluminisée bi-face (101) formant la face de chauffe (120) et si désiré avec une autre tôle d'acier ferromagnétique bas carbone aluminisée bi-face (103), **en ce que** la tôle d'acier ferromagnétique bas carbone aluminisée bi-face (101) comprend un substrat ferromagnétique en acier bas carbone (111) présentant sur chacune de ses deux faces une couche externe (112) comportant une matrice à base d'aluminium, **en ce qu'**une couche intermédiaire (113) comportant des composés intermétalliques fer/aluminium est agencée entre le substrat ferromagnétique en acier bas carbone (111) et la couche externe (112), et **en ce qu'**au moins sur le fond (122) de la face de chauffe (120) la couche externe (112) présente une épaisseur inférieure à 27 µm, de manière préférée inférieure à 20 µm, et de manière encore préférée inférieure à 18 µm.

2. Support de cuisson métallique multicouches revêtu (100) compatible avec un chauffage par induction selon la revendication 1, **caractérisé en ce que** la couche externe (112) comporte des aiguilles de Al-Fe-Si dans une matrice d'aluminium-silicium.

3. Support de cuisson métallique multicouches revêtu (100) compatible avec un chauffage par induction selon l'une des revendications 1 ou 2, **caractérisé en ce que** le substrat ferromagnétique en acier bas carbone (111) présente une épaisseur comprise entre 0,3 et 1 mm, et de préférence une épaisseur comprise entre 0,3 et 0,5 mm, et **en ce que** la tôle d'aluminium (102) présente une épaisseur comprise entre 0,3 et 3 mm, et de préférence une épaisseur comprise entre 0,5 et 1,5 mm.

4. Support de cuisson métallique multicouches revêtu (100) compatible avec un chauffage par induction selon l'une des revendications 1 à 3, **caractérisé en ce que** le substrat ferromagnétique en acier bas carbone (111) est réalisé dans une nuance d'acier comportant au plus 0,3% en masse de carbone, et de préférence entre 0,1 et 0,2 % en masse de carbone.

5. Support de cuisson métallique multicouches revêtu (100) compatible avec un chauffage par induction selon l'une des revendications 1 à 4, **caractérisé en ce que** le revêtement de protection (121) est réalisé directement sur la face de chauffe (120) du corps métallique (110).

6. Support de cuisson métallique multicouches revêtu (100) compatible avec un chauffage par induction selon l'une des revendications 1 à 5, **caractérisé en ce que** le revêtement de protection (121) est un revêtement de type PTFE, ou un revêtement de type émail, ou un revêtement de type laque, ou un revêtement de type céramique, ou un revêtement de type sol-gel.

7. Support de cuisson métallique multicouches revêtu (100) compatible avec un chauffage par induction selon la revendication 6, **caractérisé en ce que** le revêtement de protection (121) est un revêtement de type PTFE, ou un revêtement de type laque, ou un revêtement de type céramique, ou un revêtement de type sol-gel et **en ce que** le corps métallique (110) comporte un dépôt (115) à base d'aluminium présentant au moins sur le fond (122) de la face de chauffe (120) une épaisseur inférieure à 30 µm, et de préférence une épaisseur inférieure à 20 µm.

8. Support de cuisson métallique multicouches revêtu (100) compatible avec un chauffage par induction selon la revendication 6, **caractérisé en ce que** le revêtement de protection (121) est un revêtement de type émail, et **en ce que** le corps métallique (110) comporte un dépôt (115) à base d'aluminium présentant au moins sur le fond (122) de la face de chauffe (120) une épaisseur inférieure à 40 µm, et de préférence une épaisseur inférieure à 30 µm.

9. Support de cuisson métallique multicouches revêtu (100) compatible avec un chauffage par induction selon l'une des revendications 1 à 8, **caractérisé en ce que** le revêtement antiadhésif (131) est un revêtement de type PTFE, ou un revêtement de type céramique, ou un revêtement de type sol-gel.

10. Support de cuisson métallique multicouches revêtu (100) compatible avec un chauffage par induction selon l'une des revendications 1 à 9, **caractérisé en ce qu'**une paroi latérale (123) s'élève autour du fond (122) de la face de chauffe (120) pour former un récipient de cuisson (124).

11. Support de cuisson métallique multicouches revêtu (100) compatible avec un chauffage par induction selon l'une des revendications 1 à 10, **caractérisé en ce qu'**il présente un bord pincé (125) ou un bord roulé (126) ou un bord roulé ouvert (127).

12. Article culinaire (140) comportant un support de cuisson métallique multicouches revêtu (100) et un organe de préhension (150) monté sur le support de cuisson métallique multicouches revêtu (100), **caractérisé en ce que** le support de cuisson métallique multicouches revêtu (100) est conforme à l'une des revendications 1 à 11.

13. Appareil électrique de cuisson (160) comportant un support de cuisson métallique multicouches revêtu (100) associé à un foyer de chauffe par induction (170), **caractérisé en ce que** le support de cuisson métallique multicouches revêtu (100) est conforme à l'une des revendications 1 à 11.

14. Procédé d'obtention d'un support de cuisson métallique multicouches revêtu (100) compatible avec un chauffage par induction selon l'une des revendications 1 à 11, comportant les étapes suivantes :
- Découpe ou fourniture d'une forme multicouches issue d'une tôle d'acier ferromagnétique bas carbone aluminisée bi-face (101) assemblée métallurgiquement avec une tôle d'aluminium (102), la tôle d'acier ferromagnétique bas carbone aluminisée bi-face (101) présentant une première face libre, la tôle d'aluminium (102) présentant une deuxième face libre,
- Emboutissage de la forme multicouches pour former le corps métallique (110) comprenant la face de chauffe (120) correspondant à la première face libre et la face de cuisson (130) correspondant à la deuxième face libre,
- Réalisation du revêtement de protection (121) sur la face de chauffe (120).
- Réalisation du revêtement antiadhésif (131) sur la face de cuisson (130) pour former une surface de cuisson (132).

15. Procédé d'obtention d'un support de cuisson métallique multicouches revêtu (100) compatible avec un chauffage par induction selon l'une des revendications 1 à 11, comportant les étapes suivantes :
- Découpe ou fourniture d'une forme multicouches issue d'une tôle d'aluminium (102) assemblée métallurgiquement avec une tôle d'acier ferromagnétique bas carbone aluminisée bi-face (101) et avec une autre tôle d'acier ferromagnétique bas carbone aluminisée bi-face (103), la tôle d'acier ferromagnétique bas carbone aluminisée bi-face (101) présentant une première face libre, l'autre tôle d'acier ferromagnétique bas carbone aluminisée bi-face (103) présentant une deuxième face libre,
- Emboutissage de la forme multicouches pour former un corps métallique (110) comprenant une face de chauffe (120) correspondant à la première face libre et une face de cuisson (130) correspondant à la deuxième face libre,
- Réalisation d'un revêtement de protection (121) sur la face de chauffe (120).
- Réalisation d'un revêtement antiadhésif (131) sur la face de cuisson (130) pour former une surface de cuisson (132).

16. Procédé d'obtention d'un support de cuisson métallique multicouches revêtu (100) compatible avec un chauffage par induction selon l'une des revendications 14 ou 15, **caractérisé en ce qu'**après l'emboutissage de la forme multicouches et avant la réalisation du revêtement de protection (121) et du revêtement antiadhésif (131) le procédé comporte une étape de traitement d'une partie périphérique de la forme multicouches pour obtenir un bord pincé (125) ou un bord roulé (126) ou un bord roulé ouvert (127).

17. Procédé d'obtention d'un support de cuisson métallique multicouches revêtu (100) compatible avec un chauffage par induction selon l'une des revendications 14 à 16, **caractérisé en ce que** le revêtement de protection (121) est un revêtement de type PTFE, ou un revêtement de type émail, ou un revêtement de type laque, ou un revêtement de type céramique, ou un revêtement de type sol-gel.

18. Procédé d'obtention d'un support de cuisson métallique multicouches revêtu (100) compatible avec un chauffage par induction selon l'une des revendications 14 à 17, **caractérisé en ce que** le revêtement antiadhésif (131) est un revêtement de type PTFE, ou un revêtement de type céramique, ou un revêtement de type sol-gel.

19. Procédé d'obtention d'un support de cuisson métallique multicouches revêtu (100) compatible avec un chauffage par induction selon l'une des revendications 1 à 11, comportant les étapes suivantes :
- Découpe ou fourniture d'une forme multicouches issue d'une tôle d'aluminium (102) assemblée métallurgiquement avec une tôle d'acier ferromagnétique bas carbone aluminisée bi-face (101) et avec une autre tôle d'acier ferromagnétique bas carbone aluminisée bi-face (103), la tôle d'acier ferromagnétique bas carbone aluminisée bi-face (101) présentant une première face libre, l'autre tôle d'acier ferromagnétique bas carbone aluminisée bi-face (103) présentant une deuxième face libre,
- Réalisation d'un revêtement de protection (121) sur la première face libre et d'un revêtement antiadhésif (131) sur la deuxième face libre, pour obtenir une forme multicouches revêtue,
- Emboutissage de la forme multicouches revêtue pour former un corps métallique (110) revêtu comprenant une face de chauffe (120) portant le revêtement de protection (121) et une face de cuisson (130) portant le revêtement antiadhésif (131) pour former une surface de cuisson (132).

20. Procédé d'obtention d'un support de cuisson métallique multicouches revêtu (100) compatible avec un chauffage par induction selon la revendication 19, **caractérisé en ce qu'**après la réalisation du revêtement de protection (121) et du revêtement antiadhésif (131) et après l'emboutissage de la forme multicouches revêtue le procédé comporte une étape de traitement d'une partie périphérique de la forme multicouches revêtue pour obtenir un bord pincé (125) ou un bord roulé (126) ou un bord roulé ouvert (127).

21. Procédé d'obtention d'un support de cuisson métallique multicouches revêtu (100) compatible avec un chauffage par induction selon l'une des revendications 19 ou 20, **caractérisé en ce que** le revêtement de protection (121) est un revêtement de type PTFE, ou un revêtement de type laque.

22. Procédé d'obtention d'un support de cuisson métallique multicouches revêtu (100) compatible avec un chauffage par induction selon l'une des revendications 19 à 21, **caractérisé en ce que** le revêtement antiadhésif (131) est un revêtement de type PTFE.

23. Procédé d'obtention d'un support de cuisson métallique multicouches revêtu (100) compatible avec un chauffage par induction selon l'une des revendications 14 à 22, **caractérisé en ce que** la forme multicouches est un disque.

## Patentansprüche

1. Beschichtetes mehrschichtiges Metallkochgefäß (100), das mit einer Induktionsheizung kompatibel ist, einen Metallkörper (110) umfassend, der eine Heizseite (120) und eine Kochseite (130) umfasst, wobei die Heizseite (120) einen Boden (122) aufweist, der so konfiguriert ist, dass er auf einer Induktionsheizvorrichtung aufliegt, wobei die Heizseite (120) eine Schutzbeschichtung (121) trägt, wobei die Kochseite (130) eine Antihaftbeschichtung (131) trägt, die eine Kochfläche (132) bildet, **dadurch gekennzeichnet, dass** der Metallkörper (110) ein Aluminiumblech (102) umfasst, das metallurgisch mit einem beidseitig aluminisierten ferromagnetischen Stahlblech mit niedrigem Kohlenstoffgehalt (101), das die Heizseite (120) bildet, und, falls gewünscht, mit einem weiteren beidseitig aluminisierten ferromagnetischen Stahlblech mit niedrigem Kohlenstoffgehalt (103) verbunden ist, dadurch, dass das beidseitig aluminisierte ferromagnetische Stahlblech mit niedrigem Kohlenstoffgehalt (101) ein ferromagnetisches Substrat aus Stahl mit niedrigem Kohlenstoffgehalt (111) umfasst, das auf jeder seiner zwei Seiten eine äußere Schicht (112) aufweist, die eine Matrix auf Aluminiumbasis umfasst, dadurch, dass eine Zwischenschicht (113), die intermetallische Eisen-/Aluminium-Verbindungen umfasst, zwischen dem ferromagnetischen Substrat aus Stahl mit niedrigem Kohlenstoffgehalt (111) und der äußeren Schicht (112) angeordnet ist, und dadurch, dass mindestens am Boden (122) der Heizseite (120) die äußere Schicht (112) eine Dicke von weniger als 27 µm, bevorzugt weniger als 20 µm und noch bevorzugter weniger als 18 µm aufweist.

2. Beschichtetes mehrschichtiges Metallkochgefäß (100), das mit einer Induktionsheizung kompatibel ist, nach Anspruch 1, **dadurch gekennzeichnet, dass** die äußere Schicht (112) Nadeln aus Al-Fe-Si in einer Aluminium-Silizium-Matrix umfasst.

3. Beschichtetes mehrschichtiges Metallkochgefäß (100), das mit einer Induktionsheizung kompatibel ist, nach einem der Ansprüche 1 oder 2, **dadurch gekennzeichnet, dass** das ferromagnetische Substrat aus Stahl mit niedrigem Kohlenstoffgehalt (111) eine Dicke im Bereich zwischen 0,3 und 1 mm, und vorzugsweise eine Dicke im Bereich zwischen 0,3 und 0,5 mm aufweist, und dadurch, dass das Aluminiumblech (102) eine Dicke im Bereich zwischen 0,3 und 3 mm, und vorzugsweise eine Dicke im Bereich zwischen 0,5 und 1,5 mm aufweist.

4. Beschichtetes mehrschichtiges Metallkochgefäß (100), das mit einer Induktionsheizung kompatibel ist, nach einem der Ansprüche 1 bis 3, **dadurch gekennzeichnet, dass** das ferromagnetische Substrat aus Stahl mit niedrigem Kohlenstoffgehalt (111) aus einer Stahlsorte hergestellt ist, die höchstens 0,3 Masse-% Kohlenstoff und vorzugsweise zwischen 0,1 und 0,2 Masse-% Kohlenstoff umfasst.

5. Beschichtetes mehrschichtiges Metallkochgefäß (100), das mit einer Induktionsheizung kompatibel ist, nach einem der Ansprüche 1 bis 4, **dadurch gekennzeichnet, dass** die Schutzbeschichtung (121) direkt auf der Heizseite (120) des Metallkörpers (110) hergestellt ist.

6. Beschichtetes mehrschichtiges Metallkochgefäß (100), das mit einer Induktionsheizung kompatibel ist, nach einem der Ansprüche 1 bis 5, **dadurch gekennzeichnet, dass** die Schutzbeschichtung (121) eine Beschichtung vom PTFE-Typ oder eine Beschichtung vom Emaille-Typ oder eine Beschichtung vom Lack-Typ oder eine Beschichtung vom Keramik-Typ oder eine Beschichtung vom Sol-Gel-Typ ist.

7. Beschichtetes mehrschichtiges Metallkochgefäß (100), das mit einer Induktionsheizung kompatibel ist, nach Anspruch 6, **dadurch gekennzeichnet, dass** die Schutzbeschichtung (121) eine Beschichtung vom PTFE-Typ oder eine Beschichtung vom Lack-Typ oder eine Beschichtung vom Keramik-Typ oder eine Beschichtung vom Sol-Gel-Typ ist und dadurch, dass der Metallkörper (110) eine Abscheidung (115) auf Aluminiumbasis umfasst, die mindestens am Boden (122) der Heizseite (120) eine Dicke von weniger als 30 µm, und vorzugsweise eine Dicke von weniger als 20 µm aufweist.

8. Beschichtetes mehrschichtiges Metallkochgefäß (100), das mit einer Induktionsheizung kompatibel ist, nach Anspruch 6, **dadurch gekennzeichnet, dass** die Schutzbeschichtung (121) eine Beschichtung vom Emaille-Typ ist und dadurch, dass der Metallkörper (110) eine Abscheidung (115) auf Aluminiumbasis umfasst, die mindestens am Boden (122) der Heizseite (120) eine Dicke von weniger als 40 µm, und vorzugsweise eine Dicke von weniger als 30 µm aufweist.

9. Beschichtetes mehrschichtiges Metallkochgefäß (100), das mit einer Induktionsheizung kompatibel ist, nach einem der Ansprüche 1 bis 8, **dadurch gekennzeichnet, dass** die Antihaftbeschichtung (131) eine Beschichtung vom PTFE-Typ oder eine Beschichtung vom Keramik-Typ oder eine Beschichtung vom Sol-Gel-Typ ist.

10. Beschichtetes mehrschichtiges Metallkochgefäß (100), das mit einer Induktionsheizung kompatibel ist, nach einem der Ansprüche 1 bis 9, **dadurch gekennzeichnet, dass** sich eine Seitenwand (123) um den Boden (122) der Heizseite (120) herum erhebt, um einen Kochbehälter (124) zu bilden.

11. Beschichtetes mehrschichtiges Metallkochgefäß (100), das mit einer Induktionsheizung kompatibel ist, nach einem der Ansprüche 1 bis 10, **dadurch gekennzeichnet, dass** es einen gepressten Rand (125) oder einen gerollten Rand (126) oder einen offenen gerollten Rand (127) aufweist.

12. Küchenartikel (140), der ein beschichtetes mehrschichtiges Metallkochgefäß (100) und ein Greiforgan (150) umfasst, das an dem beschichteten mehrschichtigen Metallkochgefäß (100) angebracht ist, **dadurch gekennzeichnet, dass** das beschichtete mehrschichtige Metallkochgefäß (100) einem der Ansprüche 1 bis 11 entspricht.

13. Elektrische Kocheinrichtung (160), die ein beschichtetes mehrschichtiges Metallkochgefäß (100) umfasst, das einem Herd mit Induktionszeitung (170) zugeordnet ist, **dadurch gekennzeichnet, dass** das beschichtete mehrschichtige Metallkochgefäß (100) einem der Ansprüche 1 bis 11 entspricht.

14. Verfahren zum Erhalten eines beschichteten mehrschichtigen Metallkochgefäßes (100), das mit einer Induktionsheizung kompatibel ist, nach einem der Ansprüche 1 bis 11, die folgenden Schritte umfassend:
- Zuschneiden oder Bereitstellen einer mehrschichtigen Form aus einem beidseitig aluminisierten ferromagnetischen Stahlblech mit niedrigem Kohlenstoffgehalt (101), das metallurgisch mit einem Aluminiumblech (102) verbunden ist, wobei das beidseitig aluminisierte ferromagnetische Stahlblech mit niedrigem Kohlenstoffgehalt (101) eine erste freie Seite aufweist, wobei das Aluminiumblech (102) eine zweite freie Seite aufweist,
- Tiefziehen der mehrschichtigen Form, um den Metallkörper (110) zu bilden, der die Heizseite (120), die der ersten freien Seite entspricht, und die Kochseite (130), die der zweiten freien Seite entspricht, umfasst,
- Herstellen der Schutzbeschichtung (121) auf der Heizseite (120),
- Herstellen der Antihaftbeschichtung (131) auf der Kochseite (130), um eine Kochfläche (132) zu bilden.

15. Verfahren zum Erhalten eines beschichteten mehrschichtigen Metallkochgefäßes (100), das mit einer Induktionsheizung kompatibel ist, nach einem der Ansprüche 1 bis 11, die folgenden Schritte umfassend:
- Zuschneiden oder Bereitstellen einer mehrschichtigen Form aus einem Aluminiumblech (102), das metallurgisch mit einem beidseitig aluminisierten ferromagnetischen Stahlblech mit niedrigem Kohlenstoffgehalt (101) und mit einem weiteren beidseitig aluminisierten ferromagnetischen Stahlblech mit niedrigem Kohlenstoffgehalt (103) verbunden ist, wobei das beidseitig aluminisierte ferromagnetische Stahlblech mit niedrigem Kohlenstoffgehalt (101) eine erste freie Seite aufweist, wobei das weitere beidseitig aluminisierte ferromagnetische Stahlblech mit niedrigem Kohlenstoffgehalt (103) eine zweite freie Seite aufweist,
- Tiefziehen der mehrschichtigen Form, um einen Metallkörper (110) zu bilden, der eine Heizseite (120), die der ersten freien Seite entspricht, und eine Kochseite (130), die der zweiten freien Seite entspricht, umfasst,
- Herstellen einer Schutzbeschichtung (121) auf der Heizseite (120),
- Herstellen einer Antihaftbeschichtung (131) auf der Kochseite (130), um eine Kochfläche (132) zu bilden.

16. Verfahren zum Erhalten eines beschichteten mehrschichtigen Metallkochgefäßes (100), das mit einer Induktionsheizung kompatibel ist, nach einem der Ansprüche 14 oder 15, **dadurch gekennzeichnet, dass** das Verfahren nach dem Tiefziehen der mehrschichtigen Form und vor dem Herstellen der Schutzbeschichtung (121) und der Antihaftbeschichtung (131) einen Schritt des Bearbeitens eines Umfangsteils der mehrschichtigen Form umfasst, um einen gepressten Rand (125) oder einen gerollten Rand (126) oder einen offenen gerollten Rand (127) zu erhalten.

17. Verfahren zum Erhalten eines beschichteten mehrschichtigen Metallkochgefäßes (100), das mit einer Induktionsheizung kompatibel ist, nach einem der Ansprüche 14 bis 16, **dadurch gekennzeichnet, dass** die Schutzbeschichtung (121) eine Beschichtung vom PTFE-Typ oder eine Beschichtung vom Emaille-Typ oder eine Beschichtung vom Lack-Typ oder eine Beschichtung vom Keramik-Typ oder eine Beschichtung vom Sol-Gel-Typ ist.

18. Verfahren zum Erhalten eines beschichteten mehrschichtigen Metallkochgefäßes (100), das mit einer Induktionsheizung kompatibel ist, nach einem der Ansprüche 14 bis 17, **dadurch gekennzeichnet, dass** die Antihaftbeschichtung (131) eine Beschichtung vom PTFE-Typ oder eine Beschichtung vom Keramik-Typ oder eine Beschichtung vom Sol-Gel-Typ ist.

19. Verfahren zum Erhalten eines beschichteten mehrschichtigen Metallkochgefäßes (100), das mit einer Induktionsheizung kompatibel ist, nach einem der Ansprüche 1 bis 11, die folgenden Schritte umfassend:
- Zuschneiden oder Bereitstellen einer mehrschichtigen Form aus einem Aluminiumblech (102), das metallurgisch mit einem beidseitig aluminisierten ferromagnetischen Stahlblech mit niedrigem Kohlenstoffgehalt (101) und mit einem weiteren beidseitig aluminisierten ferromagnetischen Stahlblech mit niedrigem Kohlenstoffgehalt (103) verbunden ist, wobei das beidseitig aluminisierte ferromagnetische Stahlblech mit niedrigem Kohlenstoffgehalt (101) eine erste freie Seite aufweist, wobei das weitere beidseitig aluminisierte ferromagnetische Stahlblech mit niedrigem Kohlenstoffgehalt (103) eine zweite freie Seite aufweist,
- Herstellen einer Schutzbeschichtung (121) auf der ersten freien Seite und einer Antihaftbeschichtung (131) auf der zweiten freien Seite, um eine beschichtete mehrschichtige Form zu erhalten,
- Tiefziehen der beschichteten mehrschichtigen Form, um einen beschichteten Metallkörper (110) zu bilden, der eine Heizseite (120), die die Schutzbeschichtung (121) trägt, und eine Kochseite (130), die die Antihaftbeschichtung (131) trägt, umfasst, um eine Kochfläche (132) zu bilden.

20. Verfahren zum Erhalten eines beschichteten mehrschichtigen Metallkochgefäßes (100), das mit einer Induktionsheizung kompatibel ist, nach Anspruch 19, **dadurch gekennzeichnet, dass** das Verfahren nach dem Herstellen der Schutzbeschichtung (121) und der Antihaftbeschichtung (131) und nach dem Tiefziehen der beschichteten mehrschichtigen Form einen Schritt des Bearbeitens eines Umfangsteils der beschichteten mehrschichtigen Form umfasst, um einen gepressten Rand (125) oder einen gerollten Rand (126) oder einen offenen gerollten Rand (127) zu erhalten.

21. Verfahren zum Erhalten eines beschichteten mehrschichtigen Metallkochgefäßes (100), das mit einer Induktionsheizung kompatibel ist, nach einem der Ansprüche 19 oder 20, **dadurch gekennzeichnet, dass** die Schutzbeschichtung (121) eine Beschichtung vom PTFE-Typ oder eine Beschichtung vom Lack-Typ ist.

22. Verfahren zum Erhalten eines beschichteten mehrschichtigen Metallkochgefäßes (100), das mit einer Induktionsheizung kompatibel ist, nach einem der Ansprüche 19 bis 21, **dadurch gekennzeichnet, dass** die Antihaftbeschichtung (131) eine Beschichtung vom PTFE-Typ ist.

23. Verfahren zum Erhalten eines beschichteten mehrschichtigen Metallkochgefäßes (100), das mit einer Induktionsheizung kompatibel ist, nach einem der Ansprüche 14 bis 22, **dadurch gekennzeichnet, dass** die mehrschichtige Form eine Scheibe ist.

## Claims

1. Coated multilayer metal cooking support (100) compatible with induction heating, including a metal body (110) including a heating face (120) and a cooking face (130), the heating face (120) having a bottom (122) configured to rest on an induction heating device, the heating face (120) bearing a protective coating (121), the cooking face (130) bearing a non-stick coating (131) forming a cooking surface (132), **characterised in that** the metal body (110) is made of a metallurgically assembled aluminium sheet (102) with a double-sided aluminised low-carbon ferromagnetic steel sheet (101) forming the heating face (120), and, if desired, with another double-sided aluminised low-carbon ferromagnetic steel sheet (103), **in that** the double-sided aluminised low-carbon ferromagnetic steel sheet (101) has a low-carbon ferromagnetic steel substrate (111), having, on each of its two faces an outer layer (112) including an aluminium-based matrix, **in that** an intermediate layer (113) including iron/aluminium intermetallic compounds is positioned between the low-carbon ferromagnetic steel substrate (111) and the outer layer (112), and **in that** at least on the bottom (122) of the heating face (120), the outer layer (112) has a thickness of less than 27 µm, preferably less than 20 µm, and even more preferably less than 18 µm.

2. Coated multilayer metal cooking support (100) compatible with induction heating according to claim 1, **characterised in that** the outer layer (112) includes Al-Fe-Si needles in an aluminium-silicon matrix.

3. Coated multilayer metal cooking support (100) compatible with induction heating according to any one of claims 1 or 2, **characterised in that** the low-carbon ferromagnetic steel substrate (111) has a thickness of between 0.3 and 1 mm, and preferably a thickness of between 0.3 and 0.5 mm, and **in that** the aluminium sheet (102) has a thickness of between 0.3 and 3 mm, and preferably a thickness of between 0.5 and 1.5 mm.

4. Coated multilayer metal cooking support (100) compatible with induction heating according to any one of claims 1 to 3, **characterised in that** the low-carbon ferromagnetic steel substrate (111) is made from a steel grade having at most 0.3 wt.% carbon, and preferably between 0.1 and 0.2 wt.% carbon.

5. Coated multilayer metal cooking support (100) compatible with induction heating according to any one of claims 1 to 4, **characterised in that** the protective coating (121) is formed directly on the heating face (120) of the metal body (110).

6. Coated multilayer metal cooking support (100) compatible with induction heating according to any one of claims 1 to 5, **characterised in that** the protective coating (121) is a PTFE type coating, or an enamel type coating, or a lacquer type coating, or a ceramic type coating or a sol-gel type coating.

7. Coated multilayer metal cooking support (100) compatible with induction heating according to claim 6, **characterised in that** the protective coating (121) is a PTFE type coating, or a lacquer type coating, or a ceramic type coating, or a sol-gel type coating, and **in that** the metal body (110) includes an aluminium-based deposit (115) having, at least on the bottom (122) of the heating face (120), a thickness of less than 30 µm, and preferably of less than 20 µm.

8. Coated multilayer metal cooking support (100) compatible with induction heating according to claim 6, **characterised in that** the protective coating (121) is an enamel type coating, and **in that** the metal body (110) includes an aluminium-based deposit (115) having, at least on the bottom (122) of the heating face (120), a thickness of less than 40 µm, and preferably a thickness of less than 30 µm.

9. Coated multilayer metal cooking support (100) compatible with induction heating according to any one of claims 1 to 8, **characterised in that** the non-stick coating (131) is a PTFE type coating or a ceramic type coating or a sol-gel type coating.

10. Coated multilayer metal cooking support (100) compatible with induction heating according to any one of claims 1 to 9, **characterised in that** a side wall (123) rises around the bottom (122) of the heating face (120) to form a cooking vessel (124).

11. Coated multilayer metal cooking support (100) compatible with induction heating according to any one of claims 1 to 10, **characterised in that** it has a pinched edge (125) or a rolled edge (126) or an open rolled edge (127).

12. Cookware article (140) including a coated multilayer metal cooking support (100) and a gripping element (150) mounted on the coated multilayer metal cooking support (100), **characterised in that** the coated multilayer metal cooking support (100) is in accordance with any one of claims 1 to 11.

13. Electric cooking appliance (160) including a coated multilayer metal cooking support (100) associated with an induction hob (170), **characterised in that** the coated multilayer metal cooking support (100) is in accordance with any one of claims 1 to 11.

14. Method of obtaining a coated multilayer metal cooking support (100) compatible with induction heating according to any one of claims 1 to 11, including the following steps:
- cutting or supplying a multilayer shape from a metallurgically assembled double-sided aluminised low-carbon ferromagnetic steel sheet (101) with an aluminium sheet (102), the double-sided aluminised low-carbon ferromagnetic steel sheet (101) having a first free face, the aluminium sheet (102) having a second free face,
- stamping the multilayer shape to form the metal body (110) comprising the heating face (120) corresponding to the first free face and the cooking face (130) corresponding to the second free face,
- forming the protective coating (121) on the heating face (120),
- applying the non-stick coating (131) to the cooking face (130) to form a cooking surface (132).

15. Method of obtaining a coated multilayer metal cooking support (100) compatible with induction heating according to any one of claims 1 to 11, including the following steps:
- cutting or supplying a multilayer shape from a metallurgically assembled aluminium sheet (102) with a double-sided aluminised low-carbon ferromagnetic steel sheet (101) and another double-sided aluminised low-carbon ferromagnetic steel sheet (103), the double-sided aluminised low-carbon ferromagnetic steel sheet (101) having a first free face, the other double-sided aluminised low-carbon ferromagnetic steel sheet (103) having a second free face,
- stamping the multilayer shape to form a metal body (110) comprising a heating face (120) corresponding to the first free face and a cooking face (130) corresponding to the second free face,
- forming a protective coating (121) on the heating face (120),
- applying a non-stick coating (131) to the cooking face (130) to form a cooking surface (132).

16. Method for obtaining a coated multilayer metal cooking support (100) compatible with induction heating according to any one of claims 14 or 15, **characterised in that** after the stamping of the multilayer shape and before forming the protective coating (121) and the non-stick coating (131), the method includes a step of treating a peripheral part of the multilayer shape in order to obtain a pinched edge (125) or a rolled edge (126) or an open rolled edge (127).

17. Method of obtaining a coated multilayer metal cooking support (100) compatible with induction heating according to any one of claims 14 to 16, **characterised in that** the protective coating (121) is a PTFE type coating or an enamel type coating or a lacquer type coating or a ceramic type coating or a sol-gel type coating.

18. Method of obtaining a coated multilayer metal cooking support (100) compatible with induction heating according to any one of claims 14 to 17, **characterised in that** the non-stick coating (131) is a PTFE type coating or a ceramic type coating or a sol-gel type coating.

19. Method of obtaining a coated multilayer metal cooking support (100) compatible with induction heating according to any one of claims 1 to 11, including the following steps:
- cutting or supplying a multilayer shape from a metallurgically assembled aluminium sheet (102) with a double-sided aluminised low-carbon ferromagnetic steel sheet (101) and another double-sided aluminised low-carbon ferromagnetic steel sheet (103), the double-sided aluminised low-carbon ferromagnetic steel sheet (101) having a first free face, the other double-sided aluminised low-carbon ferromagnetic steel sheet (103) having a second free face,
- forming a protective coating (121) on the first free face and non-stick coating (131) on the second free face to obtain a coated multilayer shape,
- stamping the coated multilayer shape to form a coated metal body (110) comprising a heating face (120) bearing the protective coating (121) and a cooking face (130) bearing the non-stick coating (131) to form a cooking surface (132).

20. Method of obtaining a coated multilayer metal cooking support (100) compatible with induction heating according to claim 19, **characterised in that** after the protective coating (121) and the non-stick coating (131) have been formed, and after the coated multilayer shape has been stamped, the method includes a step of treating a peripheral part of the coated multilayer shape in order to obtain a pinched edge (125) or a rolled edge (126) or an open rolled edge (127).

21. Method of obtaining a coated multilayer metal cooking support (100) compatible with induction heating according to any one of claims 19 or 20, **characterised in that** the protective coating (121) is a PTFE type coating or a lacquer type coating.

22. Method of obtaining a coated multilayer metal cooking support (100) compatible with induction heating according to any one of claims 19 to 21, **characterised in that** the non-stick coating (131) is a PTFE type coating.

23. Method of obtaining a coated multilayer metal cooking support (100) compatible with induction heating according to any one of claims 14 to 22, **characterised in that** the multilayer shape is a disk.
